# EUROPÄISCHE PATENTSCHRIFT

(11) **EP 2 834 527 B1**
(45) Veröffentlichungstag und Bekanntmachung des Hinweises auf die Patenterteilung: **29.09.2021**
(21) Anmeldenummer: 13716240.0
(22) Anmeldetag: 02.04.2013
(51) Int. Cl.: F16B 5/02, F16B 31/02, F16B 39/32, F16B 41/00

(54) **BEFESTIGUNGSANORDNUNG MIT TOLERANZAUSGLEICH SOWIE VERFAHREN ZUR VORMONTAGE UND MONTAGE**
FASTENING ARRANGEMENT WITH TOLERANCE COMPENSATION, AND METHOD FOR PREASSEMBLY AND ASSEMBLY
SYSTÈME DE FIXATION À COMPENSATION DE TOLÉRANCES ET PROCÉDÉ DE PRÉMONTAGE ET MONTAGE

(30) Priorität: 03.04.2012 DE 102012102906
(43) Veröffentlichungstag der Anmeldung: 11.02.2015
(73) Patentinhaber: Böllhoff Verbindungstechnik GmbH, 33649 Bielefeld (DE)
(72) Erfinder: METTEN, Andreas, 33829 Borgholzhausen (DE); FIGGE, Hans-Ulrich, 33758 Schloß Holte-Stukenbrock (DE)
(74) Vertreter: Heyer, Volker
(86) Internationale Anmeldenummer: PCT/EP2013/056916
(87) Internationale Veröffentlichungsnummer: WO 2013/150016

(56) Entgegenhaltungen:
- EP-A1- 1 180 605
- EP-A1- 2 428 688
- DE-A1-102010 020 198
- DE-U1-202006 012 493
- DE-U1-202007 008 154
- None

## Beschreibung

### 1. Gebiet der Erfindung

Die vorliegende Erfindung betrifft eine Befestigungsanordnung zum Befestigen eines Bauteils B an einem Bauteil A mit selbsttätigem Toleranzausgleich zwischen den Bauteilen A und B. Des Weiteren betrifft vorliegende Anmeldung ein Verfahren zur Vormontage dieser Befestigungsanordnung sowie ein Verfahren zur Montage dieser Befestigungsanordnung.

### 2. Hintergrund der Erfindung

Im Stand der Technik sind unterschiedliche Konstruktionen von Befestigungsanordnungen zum Befestigen eines Bauteils an einem anderen Bauteil mit selbsttätigem Toleranzausgleich zwischen diesen Bauteilen bekannt. Derartige Befestigungsanordnungen bestehen grundsätzlich aus einem Basiselement, das an dem ersten Bauteil festgelegt wird. Zu diesem Zweck wird das Basiselement beispielsweise in das erste Bauteil eingeschraubt, dort verklemmt und somit lösbar oder unlösbar festgelegt. Mit dem Basiselement ist über eine Gewindepaarung ein Verstellelement einschraubbar. Dieses Verstellelement wird aus dem Basiselement herausgeschraubt, um Toleranzen zwischen den benachbart zueinander angeordneten Bauteilen auszugleichen, wenn eine die Bauteile verbindende Befestigungsschraube über eine weitere Gewindepaarung in das Basiselement eingeschraubt wird. Derartige Konstruktionen sind allgemein bekannt und beispielsweise in den europäischen Patentanmeldungen 1 780 424 A1 und 2 003 346 A2 beschrieben.

In den genannten Befestigungsanordnungen des Standes der Technik ist erkennbar, dass das Basiselement beispielsweise in das erste Bauteil eingeschraubt oder dort in einer entsprechenden Öffnung verriegelt wird.

Die Komponenten der genannten Befestigungsanordnungen sind jeweils einteilig aus Kunststoff hergestellt, was konstruktiv bedingt einen großen Bauraum erfordert. Des Weiteren kann die Nutzung von Kunststoffen zur Herstellung der Befestigungsanordnung Nachteile in der Stabilität, Integrität und Anwendbarkeit der Befestigungsanordnung in chemisch aggressiven Medien oder einer thermisch belasteten Umgebung mit sich bringen. Daher ist es erstrebenswert, eine kompakte Befestigungsanordnung mit geringem Bauraum oder Platzbedarf und hoher Lebensdauer in den unterschiedlichsten Einsatzgebieten bereitzustellen.

Die oben genannten Befestigungsanordnungen weisen eine lösbare Transportsicherung zwischen Verstellelement und Basiselement auf, sodass während eines Transports der Befestigungsanordnung Verstellelement und Basiselement gegen Verdrehen aneinander befestigt sind. Eine derartige Transportsicherung gewährleistet auf diese Weise, dass sich das Verstellelement nicht von dem Basiselement löst und somit die Befestigungsanordnung unvollständig an ihrem Zielort ankommt. Eine derartige Transportsicherung besteht beispielsweise aus einem federnden Steg, der in eine gegenüberliegend angeordnete Vertiefung eingreift. Auf diese Weise ist die Transportsicherung verrastend herstellbar und wieder lösbar. Bei der Vormontage bekannter Befestigungsanordnungen hat sich jedoch gezeigt, dass trotz der Transportsicherungen das Verstellelement derart fest an dem Basiselement befestigbar war, dass ein Lösen des Verstellelements aus dem Basiselement nur mit großem Aufwand oder gar nicht möglich war. Dies erschwert jedoch die Installation der Befestigungsanordnung zwischen den beiden Bauteilen und ist zeitintensiv, was auf effektive Installationsabläufe der Befestigungsanordnung einen negativen Einfluss hat.

Eine Montageeinrichtung für eine Befestigungseinrichtung zum Befestigen eines Bauteils B an einem Bauteil A mit Ausgleich von Toleranzen im Abstand zwischen den beiden Bauteilen ist in DE 20 2007 008 154 U1 beschrieben. Die Montageeinrichtung hat eine zentrale Achse und weist eine Basiseinheit sowie eine Verstelleinheit auf. Um die Basiseinheit am Bauteil A anzubringen, weist die Basiseinheit einen hülsenförmigen Käfig auf, an dem mindestens zwei federnden Clipse angeformt sind, die jeweils einen axial verlaufenden Halteabschnitt mit einem hakenförmigen Ende aufweisen, die durch Öffnungen des Bauteils A durchsteckbar sind.

Eine weitere Befestigungseinrichtung zum Befestigen eines Bauteils B an einem Bauteil A mit selbsttätigem Ausgleich von Toleranzen im Abstand zwischen den Bauteilen ist in DE 20 2006 012 493 U1 beschrieben. Die Befestigungseinrichtung weist eine Basiseinheit, eine Verstelleinheit und eine Befestigungsschraube auf. Die Basiseinheit und die Verstelleinheit werden durch eine Transportsicherung unverlierbar zusammengehalten. Hierbei weist die Rastverbindung einen am Käfig angeformten, elastisch nachgiebigen Rastarm sowie mehrere über den Umfang der Anlageplatte verteilte Rastvorsprünge auf.

Es ist daher eine Aufgabe vorliegender Erfindung eine Befestigungsanordnung bereitzustellen, die eine zeitsparende und verlässliche Installation zwischen zwei Bauteilen gewährleistet. Es ist eine weitere Aufgabe vorliegender Erfindung, ein Verfahren zur Vormontage und ein Verfahren zur Montage einer derartigen Befestigungsanordnung bereitzustellen.

### 3. Zusammenfassung der Erfindung

Die obige Aufgabe wird durch eine Befestigungsanordnung gemäß Anspruch 1, ein Verfahren zur Vormontage der Befestigungsanordnung gemäß Anspruch 11 und ein Verfahren zur Montage der Befestigungsanordnung gemäß Anspruch 12 gelöst. Vorteilhafte Ausgestaltungen und Weiterentwicklungen vorliegender Erfindung gehen aus den abhängigen Ansprüchen, der Beschreibung und den begleitenden Zeichnungen hervor.

Die erfindungsgemäße Befestigungsanordnung zum Befestigen eines Bauteils B an einem Bauteil A mit selbsttätigem Toleranzausgleich zwischen den Bauteilen A und B weist die folgenden Merkmale auf: ein am Bauteil A festlegbares Basiselement, in das eine Befestigungsschraube über eine erste Gewindepaarung einschraubbar ist, ein Verstellelement mit einem Außengewinde, dass über eine zweite Gewindepaarung in das Basiselement einschraubbar ist, wobei zwischen Basiselement und Verstellelement eine erste und eine zweite Verdrehsicherung vorgesehen sind, mit denen entsprechend ein Lösen des Verstellelements vom Basiselement während eines Transports und ein Verkontern des Verstellelements mit dem Basiselement verhindert sind. Die oben genannten Gewindepaarungen weisen im Vergleich zueinander entgegengesetzte Gangrichtungen auf.

Die erfindungsgemäße Befestigungsanordnung zeichnet sich durch eine kompakte Bauweise aus, die im Vergleich zu bekannten Befestigungsanordnungen einen geringeren Bauraum benötigt. Zur Gewährleistung dieser kompakten Bauform bei gleichzeitiger Sicherung der erforderlichen Stabilität der Befestigungsanordnung wird vorzugsweise Metall zur Herstellung der Befestigungsanordnung genutzt. Entsprechend der Funktionalität der einzelnen Komponenten der Befestigungsanordnung ist es bevorzugt, unterschiedliche Metalle für die einzelnen Komponenten einzusetzen.

Des Weiteren ist die erfindungsgemäße Befestigungsanordnung mit einer ersten und einer zweiten Verdrehsicherung zwischen Verstellelement und Basiselement ausgestattet. Die erste Verdrehsicherung stellt eine Transportsicherung dar, die durch eine lösbare Rastverbindung zwischen Basiselement und Verstellelement bereitgestellt wird. Die zweite Verdrehsicherung schützt die Befestigungsanordnung vor einem Verkontern von Basiselement und Verstellelement, das heißt die zweite Verdrehsicherung verhindert ein zu festes Eindrehen des Verstellelements in das Basiselement. Zu diesem Zweck blockiert die zweite Verdrehsicherung an einer bestimmten Winkelposition zwischen Verstellelement und Basiselement ein weiteres Eindrehen des Verstellelements in das Basiselement. Durch diese kombinierten erste und zweite Verdrehsicherungen wird somit der sichere und zusammenhängende Transport der Befestigungsanordnung bestehend aus Basiselement und Verstellelement gewährleistet sowie ein effizientes Montieren der Befestigungsanordnung zwischen den Bauteilen A und B sichergestellt. Die erste und zweite Verdrehsicherung sind konstruktiv auf unterschiedliche Weise realisiert. Gemäß unterschiedlicher Beispiele, wie sie unten näher erläutert sind, sind sie in voneinander getrennten Elementen oder gemeinsam in nur einem Element realisiert. Erfindungsgemäß sind sie in voneinander getrennten Elementen realisiert.

Erfindungsgemäß ist die erste Verdrehsicherung, die auch als Transportsicherung bezeichnet wird, ein in axialer Richtung des Verstellelements federnd angeordneter Steg, mit dem eine drehend verrastbare und lösbare Rastverbindung zwischen Verstellelement und Basiselement herstellbar ist. Die Transportsicherung ragt in radialer Richtung über zumindest einen Teil des Verstellelements hinaus, sodass eine federnde Bewegung in axialer Richtung des Verstellelements gewährleistet ist. In einer bevorzugten Ausführungsform vorliegender Erfindung besteht die Verdrehsicherung aus einem in tangentialer Richtung bezogen auf das Verstellelement verlaufenden Federarm. Dieser Federarm ist einseitig oder beidseitig am Verstellelement befestigt und umfasst eine in Richtung des Basiselements ausgebildete Ausbuchtung, die mit einer entsprechenden Vertiefung im Basiselement zusammenwirkt. Sobald das Verstellelement ausreichend weit in das Basiselement eingeschraubt worden ist, rastet die erste Verdrehsicherung federnd in die entsprechende Vertiefung am Basiselement ein, um die bereits oben genannte Transportsicherung bereitzustellen.

Gemäß der vorliegenden Erfindung ist die zweite Verdrehsicherung, die auch als Kontersicherung bezeichnet wird, ein in radialer Richtung des Verstellelements vorstehender Steg, der vorzugsweise in Richtung des Basiselements geneigt angeordnet ist und der ein weiteres Einschrauben des Verstellelements in das Basiselement blockiert. Dieser Steg ist getrennt von der Transportsicherung vorgesehen. Alternativ ist es möglich, aber nicht erfindungsgemäß, die Kontersicherung in den Steg der Transportsicherung zu integrieren.

Die zweite Verdrehsicherung ist aufgrund ihrer Funktionalität bevorzugt kompakt, stabil und nicht federnd ausgestaltet. Auf diese Weise stellt die zweite Verdrehsicherung eine Sperre dar, die entgegen einem weiteren Eindrehen des Verstellelements in das Basiselement die Drehbewegung des Verstellelements blockiert. Zu diesem Zweck greift vorzugsweise der radial vorstehende Steg der zweiten Verdrehsicherung in eine daran angepasste Vertiefung am Basiselement ein, die aufgrund der nicht federnden Konstruktion der zweiten Verdrehsicherung und der angepassten Form der Vertiefung im Basiselement ein Überdrehen dieser blockierenden Verbindung verhindert. In diesem Zusammenhang ist es bevorzugt, dass der radial vorstehende Steg der zweiten Verdrehsicherung oder Kontersicherung eine annähernd radial bezogen auf das Verstellelement orientierte Stauchfläche aufweist, mit der eine Fläche mindestens einer Vertiefung am Basiselement angreifbar ist. Um die Orientierung der genannten Stauchfläche festzulegen, wird die auf der Stauchfläche angeordnete Flächennormale betrachtet, die erfindungsgemäß bevorzugt in tangentialer Richtung bezogen auf das Verstellelement ausgerichtet ist. Vorzugsweise wirkt diese Stauchfläche der zweiten Verdrehsicherung oder Kontersicherung mit einer parallel oder annähernd parallel dazu angeordneten Fläche in der Vertiefung am Basiselement zusammen. Die auf diese Weise in Ihrer Orientierung aneinander angepassten Flächen stellen sicher, dass ein auf das Verstellelement aufgebrachtes Drehmoment in das Basiselement eingeleitet wird, um ein weiteres Eindrehen des Verstellelements in das Basiselement zu verhindern. Gemäß einer Ausführungsform vorliegender Erfindung ist die Flächennormale der Stauchfläche in einem Winkel kleiner 90° bezogen auf die Längsachse des Verstellelements und daher in Eindrehsicherung in das Basiselement geneigt angeordnet. Auf diese Weise wird sichergestellt, dass die Stauchfläche annähernd parallel zur Angriffsfläche in der Vertiefung ausgerichtet ist.

Beispielhaft umfasst das Basiselement an einer dem Verstellelement zugewandten Stirnseite mindestens eine Vertiefung, in die gleichzeitig mit der ersten und der zweiten Verdrehsicherung des Verstellelements eingreifbar ist. Erfindungsgemäß sind am Basiselement eine erste und eine zweite Vertiefung vorgesehen. Gemäß einer bevorzugten Ausführungsform umfasst das Basiselement an einer dem Verstellelement zugewandten Stirnseite zwei um 120° voneinander beabstandete Vertiefungen, in die gleichzeitig mit der ersten und der zweiten Verdrehsicherung des Verstellelements eingreifbar ist. Es ist ebenfalls denkbar, diese Vertiefungen am Basiselement in einem größeren oder kleineren Winkelabstand voneinander anzuordnen, solange die Funktionalität der ersten Verdrehsicherung und der zweiten Verdrehsicherung gleichzeitig gewährleistet sind. Gemäß einer nicht erfindungsgemäßen Ausführungsform kann nur eine Vertiefung am Basiselement vorgesehen sein, die aufgrund ihrer Formgebung sowohl mit der Transportsicherung wie auch mit der Kontersicherung zusammen wirkt. Zu diesem Zweck weisen die Vertiefungen vorzugsweise jeweils eine erste und/oder eine zweite Fläche auf, die winklig und nicht symmetrisch zueinander angeordnet sind. Natürlich ist es in gleicher Weise bevorzugt, symmetrisch zueinander angeordnete Flächen für die Vertiefungen am Basiselement zu nutzen. Vorzugsweise ist aber zumindest eine der winklig zueinander ausgerichteten Flächen der Vertiefungen an die Orientierung der Stauchfläche der zweiten Verdrehsicherung oder Kontersicherung angepasst, sodass diese zweite Fläche der Vertiefung sowie die Stauchfläche parallel oder annähernd parallel zueinander ausgerichtet sind. Daher ist gemäß einer bevorzugten Ausführungsform die erste Fläche der Vertiefungen bezogen auf die Längsachse des Basiselements in einem größeren Winkel als die zweite Fläche der Vertiefungen angeordnet. Gemäß einer weiter bevorzugten Ausgestaltung erstrecken sich die Vertiefungen über einen bestimmten Drehwinkelbereich. Die beiden in umfänglicher Richtung voneinander beabstandeten Enden der Vertiefung können mit der Transportsicherung und der Kontersicherung zusammenwirken.

Im Hinblick auf die Konstruktion der Befestigungsanordnung besteht das Verstellelement vorzugsweise aus einer mehrteiligen Konstruktion mit einer zentralen Mitschlepper-Sicherungs-Komponente. Um eine platzsparende Konstruktion der Befestigungsanordnung bereitzustellen, umfasst die zentrale Mitschlepper-Sicherungs-Komponente mindestens einen radial einwärts ragenden Mitschlepperarm sowie die radial auswärts ragende erste und zweite Verdrehsicherung. Die zentrale Mitschlepper-Sicherungs-Komponente ist derart aufgebaut, dass der mindestens eine Mitschlepperarm radial innerhalb und die Verdrehsicherungen radial außerhalb des hülsenförmigen Verstellelements angeordnet sind. Mithilfe dieser zentralen Mitschlepper-Sicherungs-Komponente wird vorzugsweise die Herstellung des Verstellelements vereinfacht, sowie die Zahl der Einzelteile des Verstellelements reduziert.

Das Verstellelement weist vorzugsweise zudem eine Gewindehülse und eine Scheibe auf, wobei die Mitschlepper-Sicherungs-Komponente mittels einer Befestigungshülse zwischen Scheibe und Gewindehülse festgelegt ist. Es ist ebenfalls bevorzugt, das oben beschriebene Verstellelement als einteilige oder mehrteilige Spritzgusskomponente oder allgemein als Kunststoffkomponente bereitzustellen.

Vorliegende Erfindung umfasst zudem eine Verbindung zwischen Bauteil A und Bauteil B, die über die oben beschriebene Befestigungsanordnung in Kombination mit einer Befestigungsschraube hergestellt worden ist.

Die derartige Verbindung wird über ein Verfahren zur Montage der Befestigungsordnung realisiert, dass die folgenden Schritte aufweist: Festlegen des Basiselements am Bauteil A, Einschrauben der Befestigungsschraube durch eine Öffnung im Bauteil B und durch das im Basiselement installierte Verstellelement in das Basiselement, sodass Toleranzen zwischen den Bauteilen A und B selbsttätig ausgeglichen werden und wobei ein Lösen zumindest der ersten Verdrehsicherung zwischen Basiselement und Verstellelement erfolgt und Festschrauben der Befestigungsschraube im Basiselement, sodass die Bauteile A und B aneinander befestigt sind.

Um ein effektives Installieren der Befestigungsanordnung zwischen den beiden Bauteilen A und B zu gewährleisten, wird die Befestigungsanordnung vor dem Vertrieb zunächst vormontiert. Dieses Verfahren zur Vormontage der Befestigungsanordnung weist die folgenden Schritte auf: Einschrauben des Verstellelements in das Basiselement, Einrasten der ersten Verdrehsicherung des Verstellelements in einer ersten Vertiefung am Basiselement und Blockieren der zweiten Verdrehsicherung des Verstellelements in einer zweiten Vertiefung am Basiselement, sodass ein Verkontern von Verstellelement und Basiselement verhindert ist. Auf diese Weise ist erfindungsgemäß bevorzugt das Verstellelement ausreichend weit in das Basiselement eingeschraubt, sodass ein Installieren zwischen den Bauteilen A und B vorbereitet ist. Gleichzeitig ist aber auch verhindert, dass das Verstellelement mit dem Basiselement während der Vormontage verkontert worden ist, was zwar einen verliersicheren Transport des Verstellelements im Basiselement garantieren würde, jedoch bei der Montage der Befestigungsanordnung zwischen den beiden Bauteilen A und B zusätzlich Zeit zum Lösen der Verbindung zwischen Verstellelement und Basiselement erforderlich machen würde. Daraus folgt, dass das Verfahren zur Vormontage eine effektive und zeitsparende Installation der Befestigungsanordnung zwischen den Bauteilen A und B vorbereitet.

### 4. Kurze Beschreibung der begleitenden Zeichnungen

Die bevorzugten Ausführungsformen vorliegender Erfindung werden mit unter Bezugnahme auf die begleitende Zeichnung näher erläutert. Es zeigen:
- Fig. 1: eine bevorzugte Ausführungsform der montierten Befestigungsanordnung zwischen den beiden Bauteilen A und B,
- Fig. 2: eine Explosionsdarstellung einer bevorzugten Ausführungsform der Befestigungsanordnung bestehend aus Basiselement und Verstellelement,
- Fig. 3: eine bevorzugte Ausführungsform des Verstellelements,
- Fig. 4: eine perspektivische Ansicht einer bevorzugten Ausführungsform des Basiselements
- Fig. 5: eine perspektivische Ansicht einer bevorzugten Ausführungsform des Verstellelements,
- Fig. 6: eine perspektivische Ansicht einer bevorzugten Ausführungsform der Befestigungsanordnung mit einer ersten Verdrehsicherung,
- Fig. 7: eine Ausschnittsvergrößerung aus Fig. 6,
- Fig. 8: eine perspektivische Ansicht in einer bevorzugten Ausführungsform der Befestigungsanordnung mit einer zweiten Verdrehsicherung,
- Fig. 9: eine Ausschnittsvergrößerung aus Fig. 8,
- Fig. 10: eine Explosionsansicht einer bevorzugten Ausführungsform des Verstellelements,
- Fig. 11: eine bevorzugte Ausführungsform der Mitschlepper-Sicherungs-Komponente in Streifenform,
- Fig. 12: eine perspektivische Ansicht einer bevorzugten Ausführungsform der Mitschlepper-Sicherungs-Komponente in Ringform,
- Fig. 13: eine bevorzugte Ausführungsform eines Verfahrens zur Vormontage der Befestigungsanordnung und
- Fig. 14: eine bevorzugte Ausführungsform des Verfahrens zur Montage der Befestigungsanordnung.

### 5. Detaillierte Beschreibung der bevorzugten Ausführungsformen

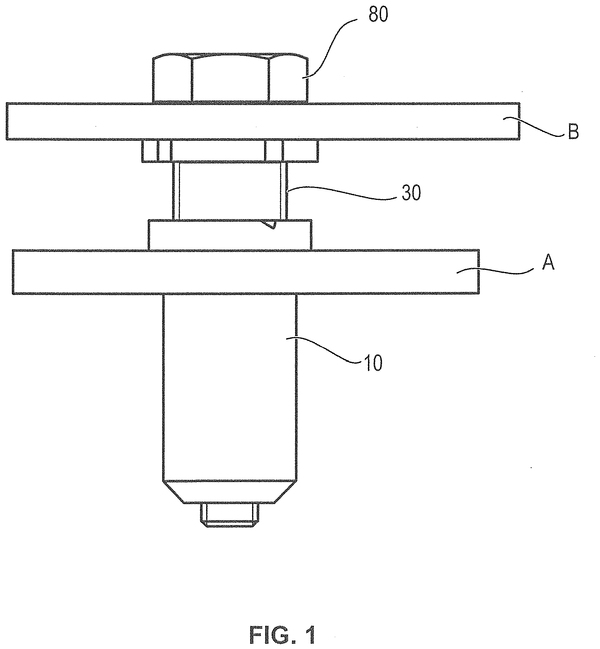

Fig. 1 zeigt eine bevorzugten Ausführungsform einer erfindungsgemäßen Befestigungsanordnung zum Befestigen eines Bauteils B an einem Bauteil A mit selbsttätigem Toleranzausgleich zwischen den Bauteilen A und B. Die Befestigungsanordnung umfasst dazu ein Basiselement 10, das in einer Öffnung des Bauteils A festgelegt ist. Ein Verstellelement 30 ist über eine Schraubverbindung mit dem Basiselement 10 verbunden. Entsprechend der Drehrichtung des Verstellelements 30 verändert sich die gemeinsame axiale Länge von Basiselement 10 und Verstellelement 30, wodurch Toleranzen zwischen den zwei benachbarten Bauteilen A, B ausgleichbar sind.

Im montierten Zustand der Befestigungsanordnung stützt sich das Verstellelement 30 an einem zweiten Bauteil B ab. Die Bauteile A und B sowie die Befestigungsanordnung 10, 30, werden über eine Befestigungsschraube 80 miteinander verbunden. Dazu wird die Befestigungsschraube 80 in einen Gewindebereich 14 im Basiselement 10 (siehe unten) eingeschraubt.

Während das Basiselement 10 aus Kunststoff oder Metall besteht, ist es bevorzugt, das Basiselement 10 aus Stahl herzustellen. Diese Materialwahl sorgt für ausreichende Stabilität, Widerstandsfähigkeit gegenüber chemischen, mechanischen und thermisch aggressiven Medien und gewährleistet zudem eine verlässliche Befestigung im Bauteil A. Vorzugsweise ist das Basiselement 10 als Klemmmutter, Schweißmutter oder Blindnietmutter realisiert. Es ist ebenfalls bevorzugt, das Basiselement 10 als Mutter mit einem Außengewinde in dem Bauteil A festzulegen. Gemäß einer weiteren Alternative wird das Basiselement 10 in der Öffnung des Bauteils A festgeklebt.

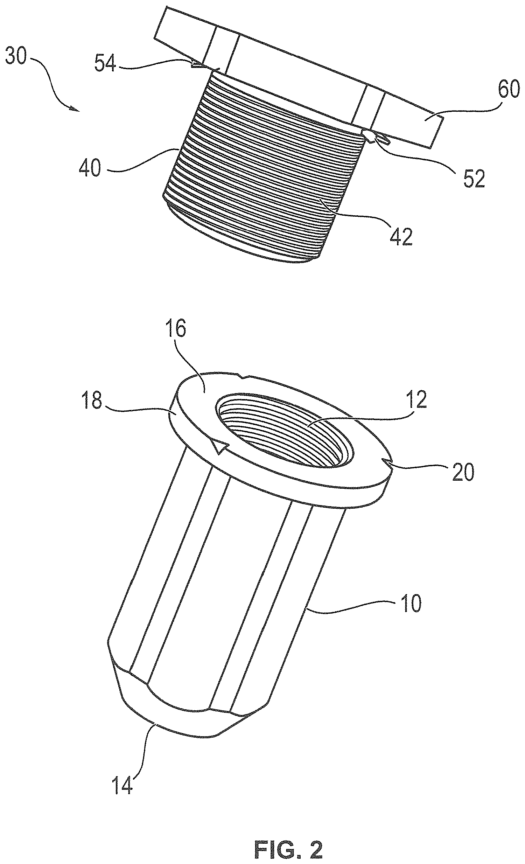

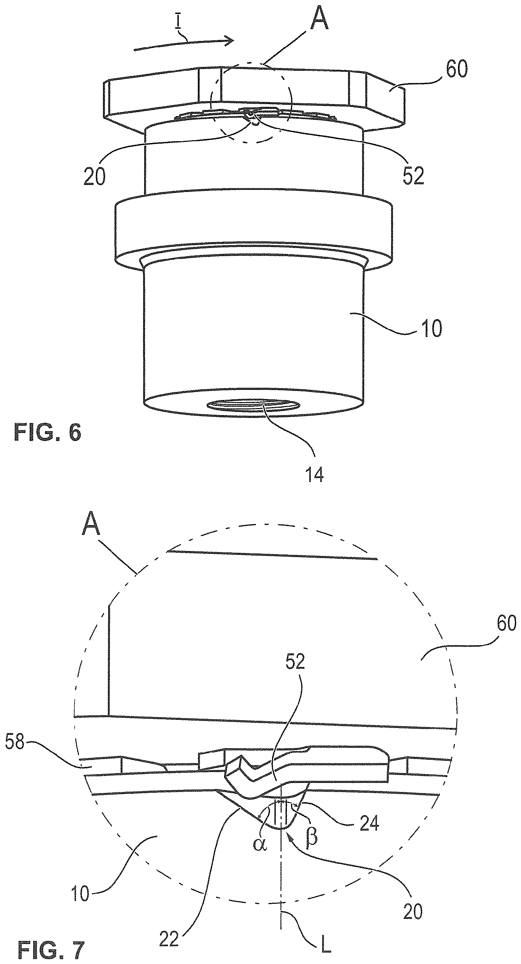

Wie man in den Fig. 2 und 6 erkennen kann, umfasst das Basiselement 10 einen inneren Gewindebereich 14 einer ersten Gangrichtung, der mit dem Gewinde der Befestigungsschraube 80 zusammenwirken. Benachbart zum inneren Gewindebereich 14 weist die Innenseite des Basiselements 10 ein Innengewinde 12 einer zweiten Gangrichtung auf, die der ersten Gangrichtung entgegengesetzt ist. Das Innengewinde 12 wirkt mit einem Außengewinde 42 einer Hülse 40 des Verstellelements 30 zusammen. Daraus folgt, dass beim Einschrauben der Befestigungsschraube 80 in den Gewindebereich 14 das Verstellelement 30 über die zweite Gewindepaarung aus dem Basiselement 10 geschraubt wird. Ein Mitdrehen des Verstellelements 30 mit der Befestigungsschraube 80 wird mit Hilfe mindestens eines Mitschleppers 56 realisiert, der eine Reibschlussverbindung zwischen Verstellelement 30 und Befestigungsschraube 80 herstellt.

Das Basiselement 10 umfasst an seinem dem Verstellelement 30 zugewandten Ende eine Stirnseite 16. Vorzugsweise ist an dieser Stirnseite 16 eine Mehrzahl von Vertiefungen 20, vorzugsweise mindestens 2 um 120° zueinander versetzte Kerben, ausgebildet. Gemäß einer bevorzugten Ausführungsform stellt ein umlaufender Flansch 18 die Stirnseite 16 bereit, an der sich drei gleichmäßig voneinander beabstandete Kerben 20 befinden. Es ist ebenfalls bevorzugt, die Kerben 20 ohne umlaufenden Flansch 18 an der Stirnseite 16 des Basiselements 10 auszubilden.

Gemäß einer nicht erfindungsgemäßen Alternative (nicht gezeigt) ist nur eine Vertiefung 20 vorgesehen, in der die erste und zweite Verdrehsicherung (siehe unten) wirksam werden. Zu diesem Zweck erstreckt sich beispielsweise diese Vertiefung 20 über einen bestimmten Drehwinkelbereich, um ein sicheres Eingreifen der ersten und zweiten Verdrehsicherung in diese Vertiefung, selbst mit Spiel, zu gewährleisten. Gemäß einer weiteren bevorzugten Ausführungsform vorliegender Erfindung sind eine beliebige Anzahl an Vertiefungen 20 vorgesehen, die gleichmäßig oder ungleichmäßig voneinander beabstandet sind. Diese mehreren Vertiefungen 20 sind vorzugsweise derart angeordnet, dass die erste und zweite Verdrehsicherung (siehe unten) gleichzeitig oder zeitlich versetzt zueinander in die Vertiefungen 20 eingreifen. Erfindungsgemäß sind eine erste und eine zweite Vertiefung 20 vorgesehen.

Die Kerben 20 wirken mit einer ersten und einer zweiten Verdrehsicherung 52, 54 zusammen, die als Transportsicherung 52 des Verstellelements 30 im Basiselement 10 und als Kontersicherung 54 zwischen dem Basiselement 10 und dem Verstellelement 30 dienen (siehe unten).

Gemäß den Fig. 2, 3 und 10 besteht das Verstellelement 30 vorzugsweise aus einer Gewindehülse 40, die über eine Presshülse 70 mit einer Scheibe 60 und einer Mitschlepper-Sicherungs-Komponente 50 verbunden ist. Die Gewindehülse 40 weist ein Außengewinde 42 auf, das mit dem Innengewinde 12 des Basiselements 10 zusammenwirkt. Wie bereits oben erwähnt worden ist, weisen das Innengewinde 12 und das Außengewinde 42 die zweite Gangrichtung auf, die der Gangrichtung der ersten Gewindepaarung zwischen Befestigungsschraube 80 und Gewindebereich 12 entgegengesetzt ist. Über die Scheibe 60 stützt sich das Verstellelement 30 am Bauteil B ab, wie in Fig. 1 veranschaulicht ist. Die Scheibe 60 und die Gewindehülse 40 bestehen aus Metall, vorzugsweise Stahl, wobei anwendungsbezogen auch andere Metalle oder Kunststoffe einsetzbar sind. Auch wenn hier eine mehrteilige Konstruktion bevorzugt ist, lässt sich das Verstellelement 30 auch als einteilige Kunststoffkomponente bereitstellen.

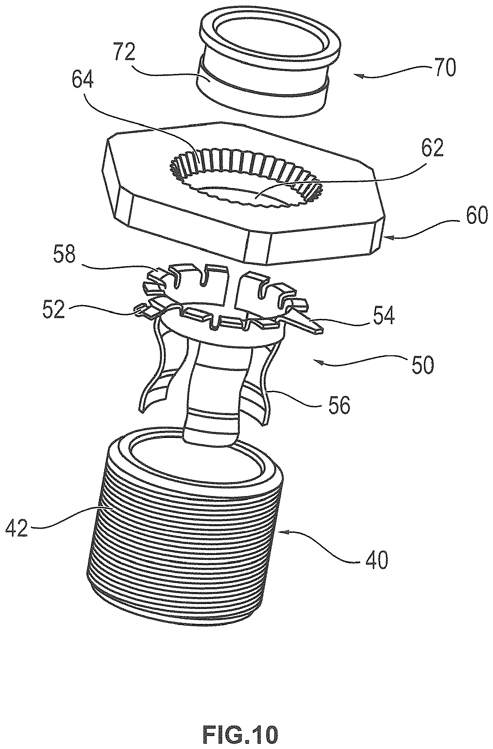

Gemäß Fig. 10 umfasst die Scheibe eine innere Öffnung 62 mit einem angefasten Bereich 64. Vorzugsweise ist der angefaste Bereich gerändelt ausgebildet, so dass der Presssitz der Presshülse 70 innerhalb der Öffnung 62 unterstützt wird. Die Presshülse 70 umfasst ebenfalls einen umlaufenden, vorzugsweise strukturierten, Bereich 72, der einen Reibschluss zwischen Presshülse 70, Mitschlepper-Sicherungs-Komponente 50 und Gewindehülse 40 unterstützt. Die Presshülse 70 wird in axialer Richtung durch die Öffnung 62 und durch die vorzugsweise ringartig gebogene Mitschlepper-Sicherungs-Komponente 50 in die Gewindehülse 40 gezwängt und dort über Reibschluss befestigt. Auf diese Weise sind die Scheibe 60, die Mitschlepper-Sicherungs-Komponente 50 und die Gewindehülse 40 verlässlich miteinander verbunden und bilden das Verstellelement 30.

Die Mitschlepper-Sicherungs-Komponente 50 besteht vorzugsweise aus einem federnden Material, wie beispielsweise Federstahl, um die Funktionalität der Mitschlepperarme 56 zu gewährleisten (siehe unten). Es ist in diesem Zusammenhang bevorzugt, die Mitschlepper-Sicherungs-Komponente 50 als Stanzbiegeteil herzustellen. Alternativ dazu sind ebenfalls auch andere federnde Materialien einsetzbar.

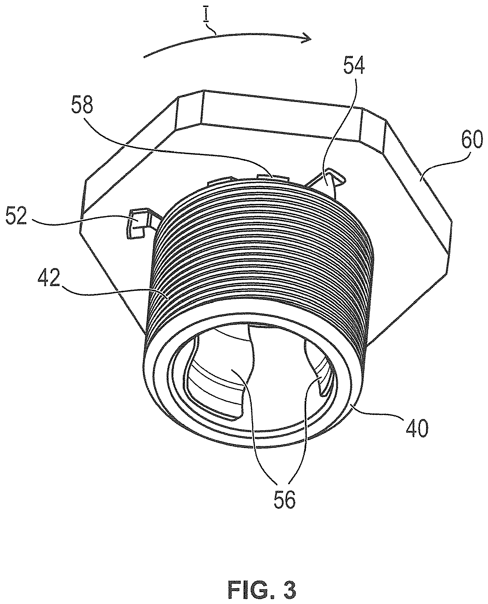

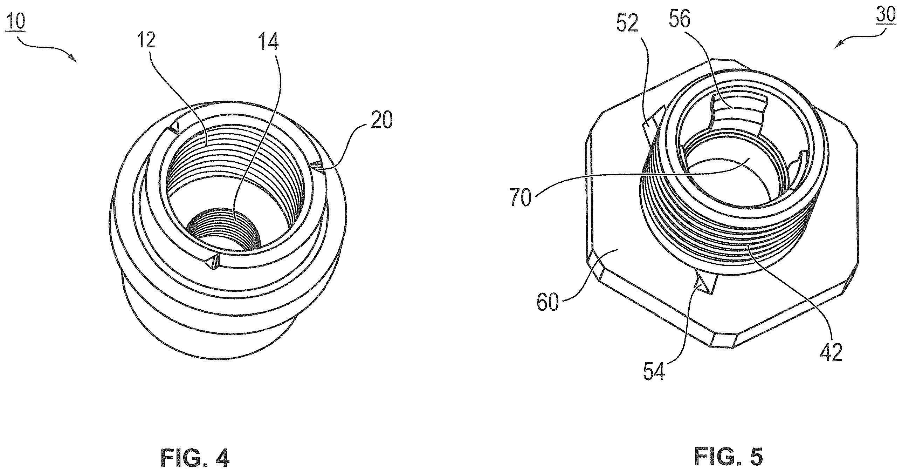

In den Fig. 3 und 5 sind der mindestens eine Mitschlepperarm 56 im Inneren des Verstellelements 30, die Presshülse 70 sowie die zwei Verdrehsicherungen 52, 54 erkennbar. Die beiden Verdrehsicherungen 52, 54 dienen als Transportsicherung 52 zum Befestigen von Basiselement 10 und Verstellelement 30 aneinander und als Kontersicherung 54 zum Verhindern eines schwer oder nicht lösbaren Eindrehens des Verstellelements 30 in das Basiselement 10. Als Bestandteil der Mitschlepper-Sicherungs-Komponente 50 ragen die Transportsicherung 52 und die Kontersicherung 54 zwischen der Gewindehülse 40 und der Scheibe 60 in radialer Richtung über den radial äußeren Rand der Gewindehülse 40 hinaus (vgl. Fig. 6, 7 und 8, 9).

Vorzugsweise sind die Transportsicherung 52 und die Kontersicherung 54 um einen Winkel von ungefähr 120° voneinander beabstandet, wobei die Kontersicherung 54 der Transportsicherung 52 in Eindrehrichtung I des Verstellelements 30 in das Basiselement 10 gesehen vorgelagert ist. Die Transportsicherung 52 und die Kontersicherung 54 können vorzugsweise auch in einem Winkel kleiner oder größer als 120° voneinander beabstandet angeordnet sein. Es ist ebenfalls bevorzugt, die Transportsicherung 52 und die Kontersicherung 54 in nur einem radial vorstehenden Element des Verstellelements 30 zu realisieren, um damit eine kompakte Bauweise zu unterstützen.

Die Transportsicherung 52 und die Kontersicherung 54 wirken mit der mindestens einen Vertiefung oder Kerbe 20 (siehe oben) zusammen, die entsprechend dem Winkelabstand von Transportsicherung und Kontersicherung 54 voneinander beabstandet sind, um den gleichzeitigen Eingriff der Transportsicherung 52 und der Kontersicherung 54 in jeweils eine oder eine gemeinsame Kerbe 20 zu gewährleisten. Erfindungsgemäß greifen die Transportsicherung 52 und die Kontersicherung 54 in räumlich versetzt zueinander angeordnete Vertiefungen 20 ein. Dieser Eingriff erfolgt gleichzeitig oder versetzt zueinander.

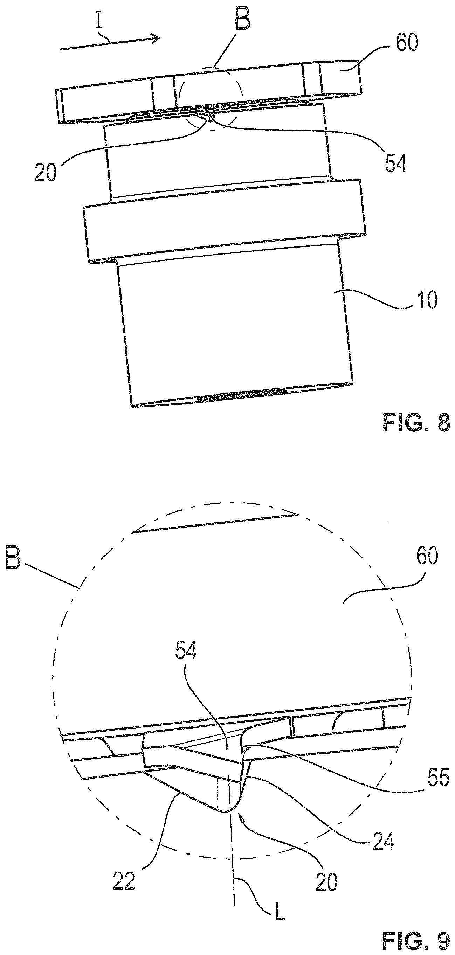

Gemäß einer bevorzugten Ausführungsform, die in den Fig. 7 und 9 veranschaulicht ist, bestehen die Kerben 20 aus zwei winklig zueinander angeordneten Flächen 22, 24. Gemäß einer Ausfuhrungsform vorliegender Erfindung sind diese Flächen 22, 24 nicht symmetrisch zueinander ausgebildet und angeordnet, wobei auch eine symmetrische Anordnung der Flächen 22, 24 Anwendung finden kann.

Gemäß einer Ausführungsform vorliegender Erfindung ist die in Eindrehrichtung I vorgelagerte Fläche 24 der Kerbe 20 in einem kleineren Winkel β bezogen auf die Längsachse L des Basiselements 10 angeordnet als die Fläche 22, die im Winkel α zur Längsachse L des Basiselements 10 angeordnet ist. Diese Ausrichtung der Fläche 22 unterstützt ein Lösen der Transportsicherung 52 bei der Montage der Befestigungsanordnung zwischen den Bauteilen A und B.

Des Weiteren stellt die bezogen auf die Längsachse L des Basiselements 10 steiler angeordnete Fläche 24 eine Blockierebene für die Kontersicherung 54 bereit (vgl. Fig. 9). Es ist ebenfalls bevorzugt, die in Fig. 9 gezeigte Kerbe/Vertiefung 20 über einen bestimmten umfänglichen Bereich auszudehnen (nicht gezeigt). Eine derart ausgebildete Kerbe/Vertiefung 20 gewährleistet den gleichzeitigen Eingriff von Transportsicherung 52 und Kontersicherung 54, wobei die Transportsicherung 52 und die Kontersicherung 54 in nur einem gemeinsamen radialen Steg oder in zwei getrennten radialen Stegen realisiert sein können. Erfindungsgemäß sind die Transportsicherung 52 und die Kontersicherung 54 in zwei getrennten radialen Stegen realisiert. Die umfänglich ausgedehnte Vertiefung/Kerbe 20 stellt ein gewisses rotatorisches Spiel zwischen Verstellelement 30 und Basiselement 10 bereit.

Die Transportsicherung 52 ist als radial auswärts bezogen auf den äußeren Rand der Gewindehülse 40 ragender federnder Steg 52 ausgebildet. Um die federnde Beweglichkeit des Stegs 52 und somit sein Verriegeln in der Kerbe 20 zu unterstützen, verläuft der Steg 52 bevorzugt in tangentialer Richtung bezogen auf die Gewindehülse 40 und entgegen der Eindrehrichtung I. Es ist ebenfalls bevorzugt, den Steg 52 in Eindrehrichtung I verlaufend tangential anzuordnen. Der Steg 52 weist zudem gemäß einer Ausführungsform eine in Richtung Basiselement 10 gerichtete wellenförmige Ausbuchtung auf, die in die jeweilige Kerbe 20 eingreift. Diese Wellenform des Stegs 52 stellt sicher, dass der Steg 52 problemlos von beiden Richtungen in die Kerbe 20 einlaufen kann, das heißt, bei einer Rechtsdrehung wie auch bei einer Linksdrehung des Verstellelements 30.

Eine Ausführungsform der Kontersicherung 54 ist in Fig. 9 dargestellt. Die Kontersicherung 54 ist ebenfalls ein radial auswärts ragender Steg bezogen auf die Gewindehülse 40. Die Kontersicherung 54 ist vorzugsweise in Richtung des Basiselements 10 geneigt angeordnet, so dass die Kontersicherung 54 einen Winkel < 90° mit der Längsachse L des Verstellelements 30 einschließt. Zudem umfasst die Kontersicherung 54 eine Stauchfläche 55, deren Flächen normale in annähernd tangentialer Richtung bezogen auf die Gewindehülse 40 verläuft. Wird das Verstellelement 30 in das Basiselement 10 eingedreht/eingeschraubt und somit die Kontersicherung 54 in Richtung Vertiefung 20 versetzt, greift in einer bestimmten Winkelposition die Stauchfläche 54 an der Fläche 24 an. Dadurch wird ein weiteres Eindrehen und Verkontern des Verstellelements 20 im Basiselement 10 blockiert. Diese Blockierfunktion ist vorzugsweise optimal, wenn die Stauchfläche 55 und die Fläche 24 parallel zueinander angeordnet sind.

Des Weiteren sollte man beachten, dass vorzugsweise die Kontersicherung 54 in einer Radialebene angeordnet ist, die mehr von der Scheibe 60 beabstandet ist als die Radialebene, in der die Transportsicherung 52 angeordnet ist. Auf diese Weise blockiert die Kontersicherung 54 effektiv und belastbar gegen ein Verkontern von Verstellelement 30 und Basiselement 10, während gleichzeitig ein leicht lösbares Verriegeln der Transportsicherung 52 in der Kammer 20 gewährleistet ist.

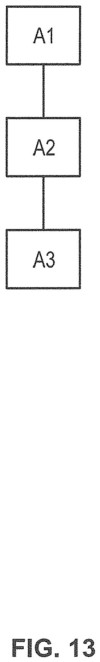

Aus der oben beschriebenen Konstruktion der Befestigungsanordnung und ihrer einzelnen Komponenten ergibt sich daher folgendes Verfahren zur Vormontage der Befestigungsanordnung zur Vorbereitung der späteren Installation der Befestigungsanordnung zwischen den beiden Bauteilen A und B. Zunächst wird das Verstellelement 30 in das Basiselement 10 eingeschraubt (Schritt A1). Nachdem das Verstellelement 30 weit genug in das Basiselement 10 eingeschraubt worden ist, rastet die erste Verdrehsicherung, im speziellen die Transportsicherung 52, des Verstellelements 30 in der ersten Vertiefung oder Kerbe 20 am Basiselement 10 ein (Schritt A2). Da trotz des Einrastens der Transportsicherung 52 in der Kerbe 20 das Verstellelement 30 weiter in das Basiselement eingedreht werden kann, erfolgt nach weiterem Eindrehen des Verstellelements 30 in das Basiselement 10 ein Blockieren der zweiten Verdrehsicherung bzw. der Kontersicherung 54 des Verstellelements 30 in einer zweiten Vertiefung bzw. Kerbe 20 am Basiselement 10, so dass das Verkontern von Verstellelement 30 und Basiselement 10 verhindert ist (Schritt A3). (vgl. das Flussdiagramm gemäß Fig. 13)

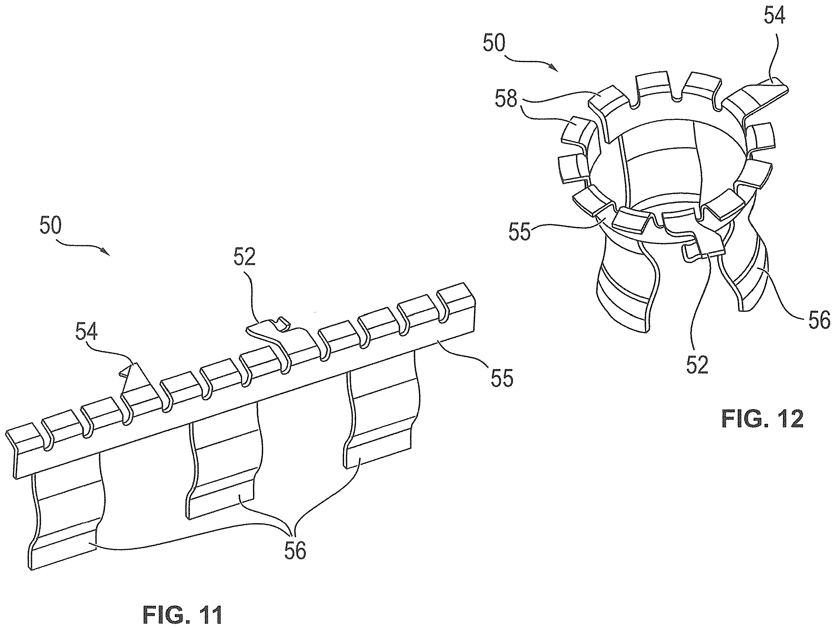

Die kompakte und platzsparende Konstruktion des Verstellelements 30 basiert zum Teil auf dem Einsatz der Mitschlepper-Sicherungs-Komponente 50 (vgl. Fig. 10 bis 12). Vorzugsweise wird die Mitschlepper-Sicherungs-Komponente 50 als ein gerade verlaufendes Teil gemäß Fig. 11 aus einem federnden Metall ausgestanzt und gebogen. Vorzugsweise besteht die Mitschlepper-Sicherungs-Komponente 50 gemäß Fig. 11 aus Federstahl, während auch andere robuste federnde Materialien geeignet sind. Die Mitschlepper-Sicherungs-Komponente 60 liegt somit bevorzugt als Stanzbiegeteil aus Federstahl vor.

Um die Herstellung der Befestigungsanordnung zu vereinfachen, wird zunächst die Mitschlepper-Sicherungs-Komponente 50 gemäß Fig. 11 gestanzt und gebogen. Danach wird die offene Ringform der Mitschlepper-Sicherungs-Komponente 50 gemäß Fig. 12 erzeugt. Diese vorzugsweise ringförmig ausgebildete Mitschlepper-Sicherungs-Komponente 50 umfasst die Mitschlepperarme 56, die eine Wellenform mit einer radial einwärts gerichteten Ausbuchtung aufweisen (vgl. Fig. 12). Gemäß einer Ausführungsform umfasst die Mitschlepper-Sicherungs-Komponente 50 mindestens einen Mitschlepperarm 56, der nach dem Zusammenbau im Inneren der Gewindehülse 40 angeordnet ist. Es ist weiterhin bevorzugt, zwei oder drei Mitschlepperarme 56 in der Gewindehülse 40 anzuordnen. Im installierten Zustand verengen die Mitschlepper 56 die Durchgangsöffnung durch die Gewindehülse 40 derart, dass ihr Innendurchmesser kleiner ist als ein Außendurchmesser der Befestigungsschraube 80. Dadurch dreht die Befestigungsschraube 80 das Verstellelement so lange mit, bis das Verstellelement 30 am Bauteil B anstößt.

An ihrer der Scheibe 60 zugewandten Seite umfasst die Mitschlepper-Sicherungs-Komponente 50 einen offenen umlaufenden ringartigen Streifen 55, an dem die Mitschlepperarme 56 und die Verdrehsicherungen 52, 54 befestigt sind. Der ringartige Streifen 55 hat zur Vereinfachung der Herstellung eine polygonale Form und lässt sich damit an jede beliebige Öffnung anpassen. Zudem wird durch Biegen der polygonalen Form vermieden, dass der ringartige Streifen 55 wieder auffedert, d. h. sich in die gerade Form gemäß Fig. 11 zurück verformt.

An dem ringartigen Streifen 55 ist an der mitschlepperabgewandten Seite ein umlaufender Ringbund 58 angeordnet. Dieser Ringbund 58 setzt sich aus gleichmäßig beabstandeten oder radial auswärts ragenden Fähnchen zusammen, die im späteren Verstellelement 30 zwischen Scheibe 60 und Gewindehülse 40 klemmend gehalten werden. Die Mitschlepper-Sicherungs-Komponente 50 wird über die Presshülse 70 fixiert, die den Ringbund 55 zwischen Scheibe 60 und Gewindehülse 40 sowie den ringartigen Streifen 55 zwischen Presshülse 70 und Innenwand der Gewindehülse 40 einklemmt. Daraus folgt eine stabile und verlässliche Anordnung der Mitschlepperarme 56 sowie der Verdrehsicherung 52, 54 in der Befestigungsanordnung.

Um die erfindungsgemäße Befestigungsanordnung zwischen den beiden Bauteilen A und B zu montieren, sind die folgenden Schritte erforderlich. Zunächst wird vorzugsweise die Befestigungsanordnung bestehend aus Verstellelement 30 und Basiselement 10 zum Kunden transportiert. Dabei entfalten Transportsicherung 52 und Kontersicherung 54 einzeln oder gemeinsam ihre Wirkung. Beim Kunden wird dann das Basiselement 10 im Bauteil A installiert bzw. festgelegt (Schritt B2), wobei zuvor das Verstellelement 30 vom Basiselement 10 und somit auch Transportsicherung 52 und/oder Kontersicherung 54 gelöst worden sind (opt. B1). Nachfolgend wird vorzugsweise das Verstellelement 30 wieder im Basiselement 10 installiert, um gesichert durch Transportsicherung 52 und/oder Kontersicherung 54 die gesamte Anordnung zum Bauteil B transportieren zu können.

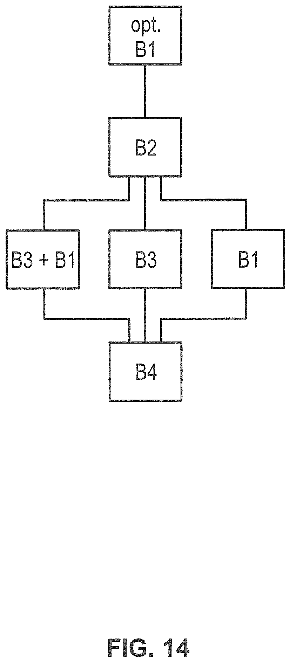

Im Schritt B3 wird die Befestigungsschraube 80 durch eine Öffnung im Bauteil B und durch das im Basiselement 10 installierte Verstellelement 30 in das Basiselement 10 eingeschraubt, so dass Toleranzen zwischen den Bauteilen A und B automatisch ausgeglichen werden. Gleichzeitig wird zu Beginn dieses Vorgangs die Transportsicherung 52 und/oder die Kontersicherung 54 gelöst (B1). Im Schritt B4 erfolgt dann ein Festschrauben der Befestigungsschraube 80 im Basiselement 10, so dass die Bauteil A und B aneinander befestigt sind. (vgl. Fig. 14)

## Patentansprüche

1. Befestigungsanordnung zum Befestigen eines Bauteils B an einem Bauteil A mit selbsttätigem Toleranzausgleich zwischen den Bauteilen A und B, die die folgenden Merkmale aufweist:
ein am Bauteil A festlegbares Basiselement (10), in das eine Befestigungsschraube (80) über eine erste Gewindepaarung einschraubbar ist,
ein Verstellelement (30) mit einem Außengewinde (42), das über eine zweite Gewindepaarung in das Basiselement (10) einschraubbar ist, wobei
zwischen Basiselement (10) und Verstellelement (30) eine erste (54) und eine zweite Verdrehsicherung (52) vorgesehen sind, mit denen entsprechend ein Lösen des Verstellelements (30) vom Basiselement (10) während eines Transports und ein Verkontern des Verstellelements (30) mit dem Basiselement (10) verhindert sind, und die Befestigungsanordnung ist **dadurch gekennzeichnet, dass**
die erste Verdrehsicherung (54) mit einer ersten Vertiefung (20) am Basiselement (10) und die zweite Verdrehsicherung (52) mit einer zweiten Vertiefung (20) am Basiselement (10) zusammenwirkt,
die erste Verdrehsicherung (54) ein in axialer Richtung des Verstellelements (30) federnder Steg ist, mit dem eine drehend lösbare Rastverbindung mit dem Basiselement (10) herstellbar ist, und
die zweite Verdrehsicherung (52) ein in radialer Richtung des Verstellelements (30) vorstehender Steg ist, der ein weiteres Einschrauben des Verstellelements (30) in das Basiselement (10) blockiert.

2. Befestigungsanordnung gemäß Anspruch 1, deren Steg eine Stauchfläche (55) mit einer annähernd tangential bezogen auf das Verstellelement (30) orientierten Normalen aufweist, mit der eine Fläche (22, 24) mindestens einer Vertiefung (20) am Basiselement (10) angreifbar ist.

3. Befestigungsanordnung gemäß einem der vorhergehenden Ansprüche, deren Basiselement (10) an einer dem Verstellelement (30) zugewandten Stirnseite (16) zwei um 120° voneinander beabstandete Vertiefungen (20) aufweist, in die mit der ersten (54) und/oder der zweiten Verdrehsicherung (52) des Verstellelements (30) eingreifbar ist.

4. Befestigungsanordnung gemäß Anspruch 3, deren Vertiefungen (20) jeweils eine erste (22) und eine zweite Fläche (24) aufweisen, die winklig und nicht symmetrisch zueinander angeordnet sind.

5. Befestigungsanordnung gemäß Anspruch 4, in der die erste Fläche (22) bezogen auf die Längsachse (L) des Basiselements (10) in einem größeren Winkel als die zweite Fläche (24) angeordnet ist.

6. Befestigungsanordnung gemäß Anspruch 1, in der das Verstellelement (30) einteilig oder mehrteilig ausgebildet und eine zentrale Mitschlepper-Sicherungs-Komponente (50) aufweist.

7. Befestigungsanordnung gemäß Anspruch 6, in der die zentrale Mitschlepper-Sicherungs-Komponente (50) ringförmig ausgebildet ist mit mindestens einem radial einwärts ragenden Mitschlepperarm (56) und den radial auswärts ragenden ersten (54) und zweiten Verdrehsicherungen (52).

8. Befestigungsanordnung gemäß Anspruch 6, in der das Verstellelement (30) eine Gewindehülse (40) und eine Scheibe (60) aufweist, wobei die Mitschlepper-Sicherungs-Komponente (50) mittels einer Befestigungshülse (70) zwischen Scheibe (60) und Gewindehülse (40) festgelegt ist.

9. Befestigungsanordnung gemäß Anspruch 6, in der das Verstellelement (30) als ein einteiliges Kunststoffteil hergestellt ist.

10. Eine Verbindung zwischen Bauteil A und Bauteil B, die über die Befestigungsanordnung gemäß einem der vorhergehenden Ansprüche in Kombination mit einer Befestigungsschraube (80) hergestellt worden ist.

11. Verfahren zur Vormontage der Befestigungsanordnung gemäß Anspruch 1, das die folgenden Schritte aufweist:
Einschrauben (A1) des Verstellelements (30) in das Basiselement (10),
Einrasten (A2) der ersten Verdrehsicherung (54) des Verstellelements (30) in einer ersten Vertiefung (20) am Basiselement (10) und
Blockieren (A3) der zweiten Verdrehsicherung (52) des Verstellelements (30) in einer zweiten Vertiefung (20) am Basiselement (10), sodass ein Verkontern von Verstellelement (30) und Basiselement (10) verhindert ist.

12. Verfahren zur Montage der Befestigungsanordnung gemäß Anspruch 1, das die folgenden Schritte aufweist:
Lösen (B1) zumindest der ersten (54) und/oder zweiten Verdrehsicherung (52) zwischen Basiselement (10) und Verstellelement (30),
Festlegen (B2) des Basiselements (10) am Bauteil A,
Einschrauben (B3) der Befestigungsschraube (80) durch eine Öffnung in Bauteil B und durch das im Basiselement (10) installierte Verstellelement (30) in das Basiselement (10), so dass Toleranzen zwischen den Bauteilen A und B selbsttätig ausgeglichen werden und wobei ein Lösen (B1) zumindest der ersten (54) und/oder zweiten Verdrehsicherung (52) zwischen Basiselement (10) und Verstellelement (30) erfolgt, und
Festschrauben (B4) der Befestigungsschraube (80) im Basiselement (10), so dass die Bauteile A und B aneinander befestigt sind.

## Claims

1. Fastening arrangement for fastening a component B at a component A with automatic tolerance compensation between the components A and B, the fastening arrangement comprising the following features:
a basic element (10) fixable at component A, into which a fastening screw (80) is screwable via a first thread pairing,
an adjusting element (30) having an external thread (42), which is screwable into the basic element (10) via a second thread pairing, wherein
a first (54) and a second anti-twist protection (52) are provided between basic element (10) and adjusting element (30) by means of which a respective releasing of the adjusting element (30) from the basic element (10) during a transport and a locking of the adjusting element (30) with the basic element (10) is prevented and the fastening arrangement is **characterized in that**
the first anti-twist protection (54) interacts with a first recess (20) at the basic element (10) and the second anti-twist protection (52) interacts with a second recess (20) at the basic element (10),
the first anti-twist protection (54) is a web springing in axial direction of the adjusting element (30), by means of which web a locking connection with the basic element (10) is creat-able which is releasable by rotation, and
the second anti-twist protection (52) is a web protruding in radial direction of the adjusting element (30), which blocks a further screwing-in of the adjusting element (30) into the basic element (10).

2. Fastening arrangement according to claim 1, the web of which has a compression surface (55) having a normal oriented almost tangentially with respect to the adjusting element (30) by means of which a surface (22, 24) of at least one recess (20) at the basic element (10) may be engaged.

3. Fastening arrangement according to one of the preceding claims, the basic element (10) of which comprises at a front surface (16) facing the adjusting element (30) two recesses spaced from each other by 120°, which are engageable by the first (54) and/or the second anti-twist protection (52) of the adjusting element (30).

4. Fastening arrangement according to claim 3, the recesses (20) of which comprise a first (22) and a second surface (24), respectively, which are arranged angularly and non-symmetrically with respect to each other.

5. Fastening arrangement according to claim 4, in which with respect to the longitudinal axis (L) of the basic element (10), the first surface (22) is arranged at a larger angle than the second surface (24).

6. Fastening arrangement according to claim 1, in which the adjusting element (30) is formed in one or multiple parts and which comprises a central dragging-safeguard-component (50).

7. Fastening arrangement according to claim 6, in which the central dragging-safeguard-component (50) is configured annularly having at least one radially inwardly protruding dragging arm (56) as well as the radially outwardly protruding first (54) and second anti-twist protections (52).

8. Fastening arrangement according to claim 6, in which the adjusting element (30) comprises a threaded sleeve (40) and a disc (60), wherein the dragging-safeguard-component (50) is fixed between disc (60) and threaded sleeve (40) by means of a fastening sleeve (70).

9. Fastening arrangement according to claim 6, in which the adjusting element (30) is produced as a one-piece plastic component.

10. A connection between component A and component B which has been established via the fastening arrangement according to one of the preceding claims in combination with a fastening screw (80).

11. A method for pre-assembling the fastening arrangement according to claim 1, comprising the following steps:
screwing-in (A1) of the adjusting element (30) into the basic element (10),
locking (A2) of the first anti-twist protection (54) of the adjusting element (30) in a first recess (20) at the basic element (10) and
blocking (A3) of the second anti-twist protection (52) of the adjusting element (30) in a second recess (20) at the basic element (10) so that a locking of adjusting element (30) and basic element (10) is prevented.

12. Method for assembling the fastening arrangement according to claim 1, comprising the following steps:
releasing (B 1) at least the first (54) and/or the second anti-twist protection (52) between basic element (10) and adjusting element (30),
fixing (B2) the basic element (10) at component A,
screwing-in (B3) of the fastening screw (80) through an opening in component B and through the adjusting element (30) installed in the basic element (10) into the basic element (10) so that tolerances between the components A and B are compensated automatically and wherein a releasing (B1) of at least the first (54) and/or second anti-twist protection (52) takes place between basic element (10) and adjusting element (30), and
screwing (B4) the fastening screw (80) tightly into the basic element (10) so that the components A and B are fastened at each other.

## Revendications

1. Système de fixation pour la fixation d'un composant B à un composant A avec compensation de tolérances automatique entre les composants A et B, présentant les caractéristiques suivantes :
- un élément de base (10) apte à être immobilisé sur le composant A, dans lequel une vis de fixation (80) peut être vissée par un premier accouplement de filetages,
- un élément de réglage (30) avec un filetage extérieur (42), apte à être vissé dans l'élément de base (10) par un deuxième accouplement de filetages, dans lequel
- il est prévu une première (54) et une deuxième sécurité anti-rotation (52) entre l'élément de base (10) et l'élément de réglage (30), permettant d'empêcher respectivement un détachement de l'élément de réglage (30) par rapport à l'élément de base (10) pendant un transport et un blocage de l'élément de réglage (30) avec l'élément de base (10), et le système de fixation étant **caractérisé en ce que**
- la première sécurité anti-rotation (54) coopère avec un premier renfoncement (20) dans l'élément de base (10) et le deuxième sécurité anti-rotation (52) coopère avec un deuxième renfoncement (20) dans l'élément de base (10),
- la première sécurité anti-rotation (54) est une tige faisant ressort dans une direction axiale de l'élément de réglage (30), permettant de réaliser une liaison par encliquetage libérable par rotation avec l'élément de base (10), et
- la deuxième sécurité anti-rotation (52) est une tige faisant saillie dans une direction radiale de l'élément de réglage (30), laquelle bloque un vissage supplémentaire de l'élément de réglage (30) dans l'élément de base (10).

2. Système de fixation selon la revendication 1, dont la tige présente une surface de refoulement (55) avec une normale orientée approximativement tangentiellement par rapport à l'élément de réglage (30), laquelle peut agir sur une surface (22, 24) d'au moins un renfoncement (20) dans l'élément de base (10).

3. Système de fixation selon l'une des revendications précédentes, dont l'élément de base (10) présente deux renfoncements (20) espacés de 120° l'un par rapport à l'autre sur une face frontale (16) tournée vers l'élément de réglage (30), dans lesquels peuvent s'engager la première (54) et/ou la deuxième sécurité anti-rotation (52) de l'élément de réglage (30).

4. Système de fixation selon la revendication 3, dont les renfoncements (20) présentent respectivement une première (22) et une deuxième surface (24), lesquelles sont agencées de façon angulaire et non symétrique l'une par rapport à l'autre.

5. Système de fixation selon la revendication 4, dans lequel la première surface (22) est agencées selon un angle plus grand par rapport à l'axe longitudinal (L) de l'élément de base (10) que la deuxième surface (24).

6. Système de fixation selon la revendication 1, dans lequel l'élément de réglage (30) est conçu en une seule ou plusieurs pièces et présente un composant central de fixation de remorqueur (50).

7. Système de fixation selon la revendication 6, dans lequel le composant central de fixation de remorqueur (50) est conçu de façon annulaire, avec au moins un bras de remorqueur (56) faisant saillie radialement vers l'intérieur et la première (54) et la deuxième sécurité anti-rotation (52) faisant saillie radialement vers l'extérieur.

8. Système de fixation selon la revendication 6, dans lequel l'élément de réglage (30) présente une douille filetée (40) et un disque (60), dans lequel le composant central de fixation de remorqueur (50) est immobilisé entre le disque (60) et la douille filetée (40) au moyen d'une douille de fixation (70).

9. Système de fixation selon la revendication 6, dans lequel l'élément de réglage (30) est réalisé comme une pièce unitaire en plastique.

10. Assemblage entre un composant A et un composant B, lesquels ont été réalisés à l'aide du système de fixation selon l'une des revendications précédentes, en combinaison avec une vis de fixation (80).

11. Procédé de prémontage du système de fixation selon la revendication 1, présentant les étapes suivantes :
- vissage (A1) de l'élément de réglage (30) dans l'élément de base (10),
- encliquetage (A2) de la première sécurité anti-rotation (54) de l'élément de réglage (30) dans un premier renfoncement (20) dans l'élément de base (10), et
- blocage (A3) de la deuxième sécurité anti-rotation (52) de l'élément de réglage (30) dans un deuxième renfoncement (20) dans l'élément de base (10), de manière à empêcher un blocage entre l'élément de réglage (30) et l'élément de base (10).

12. Procédé de montage du système de fixation selon la revendication 1, présentant les étapes suivantes :
- desserrage (B1) au moins de la première (54) et/ou de la deuxième sécurité anti-rotation (52) entre l'élément de base (10) et l'élément de réglage (30),
- immobilisation (B2) de l'élément de base (10) sur le composant A,
- vissage (B3) de la vis de fixation (80) dans l'élément de base (10) à travers une ouverture dans le composant B et à travers l'élément de réglage (30) installé dans l'élément de base (10), de sorte que des tolérances entre le composant A et le composant B sont compensées automatiquement, et dans lequel il est prévu un desserrage (B1) au moins de la première (54) et/ou de la deuxième sécurité anti-rotation (52) entre l'élément de base (10) et l'élément de réglage (30), et
- serrage (B4) de la vis de fixation (80) dans l'élément de base (10), de manière à fixer les composants A et B entre eux.
